# EUROPEAN PATENT SPECIFICATION

(11) **EP 1 164 558 B1**
(45) Date of publication and mention of the grant of the patent: **15.04.2009**
(21) Application number: 01118769.7
(22) Date of filing: 29.09.1997
(51) Int. Cl.: G08G 1/0968, G01C 21/36

(54) **Vehicle navigation apparatus and storage medium**
Fahrzeugnavigationsgerät und Speichermedium
Appareil de navigation pour véhicule et moyen de mémorisation

(30) Priority: 30.09.1996 JP 25871496; 30.09.1996 JP 25988996
(43) Date of publication of application: 19.12.2001
(62) Divisional of application: 97116904.0
(73) Proprietor: AISIN AW CO., LTD., Anjo-shi Aichi-ken 444-11 (JP)
(72) Inventor: Nimura, Mitsuhiro, Anjo-shi, Aichi 444-11 (JP); Kato, Kiyohide, Anjo-shi, Aichi 444-11 (JP); Ito, Yasunobu, Anjo-shi, Aichi 444-11 (JP)
(74) Representative: Vossius & Partner

(56) References cited:
- EP-A- 0 349 652
- EP-A- 0 485 120
- EP-A- 0 524 814

## Description

The present invention relates generally to vehicle navigation apparatus.

Conventionally, in vehicle navigation apparatus for permitting input of a destination, pass-through point, facility to see, and the like, for searching for a guidance route to a destination, and for providing guidance along the route searched, there has been known the one which displays on a guidance screen facility marks (landmarks) such as gas stations, banks, convenience stores, and the like. Another one has been proposed which is capable of offering selectivity of such landmarks to be displayed on the guidance screen; for example, it is designed so that in cases where immediate approach to a nearby gas station is required due to shortage of vehicle fuel, it displays marks representative of gas stations thereby enabling a vehicle driver to find the nearest one from among them. In displaying of such landmarks in the prior art navigation apparatus, there has been a drawback that where a great number of facilities are present as landmarks within an area being displayed on the guidance screen, if these are displayed automatically, an inherent or original map is under such landmarks and is then difficult to see causing visual recognizability to likewise decrease.

EP-A-0 524 814 discloses a vehicle navigation device wilk a landmark selection and display means

It is an objective of the invention to provide a vehicle navigation apparatus capable of reducing a search time duration while enabling provision of acceptable guidance which meets drivers' references, by selectively making use of either one of the entire route search and nearby-area route search in conformity with conditions upon occurrence of such out-of-the-route event.

A further objective of the present invention is to provide improved visual recognizability by preventing the inherent or "native" map display from becoming difficult to see in the case of displaying several landmarks on a guidance screen.

These objectives are solved with the features of the claims.

An explanation will now be given of one embodiment of the present invention hereinafter, with reference to the drawings:
Fig. 1 is a diagram showing one embodiment of the vehicle navigation apparatus to which the present invention is applied.
Fig. 2 is a diagram showing one exemplary configuration of major data files in accordance with the invention.
Fig. 3 is a diagram showing an exemplary configuration of major data files in accordance with the invention.
Fig. 4 is a diagram showing one exemplary configuration of major data files in accordance with the invention.
Fig. 5 is a diagram showing landmark data.
Fig. 6 is a diagram for explanation of the flow of an entire system of the vehicle navigation apparatus in accordance with the invention.
Fig. 7 is a diagram showing a search processing flow of the invention.
Fig. 8 is a diagram for explanation of a method of judging whether guidance is required or not.
Fig. 9 is a diagram showing a table of a predetermined number.
Fig. 10 is a diagram for explanation of a re-search method.
Fig. 11 is a diagram for explanation of one example of a case of occurrence of an out-of-the-route along a loop-like road.
Fig. 12 is a diagram for explanation of one example of a case of sequential occurrences of out-of-the-route events.
Fig. 13 is a diagram showing a guidance screen for displaying thereon landmarks.
Fig. 14 is a diagram showing a selection screen.
Fig. 15 is a diagram showing a set screen for display criteria settings.
Fig. 16 is a diagram showing a screen for use in setting display of a nearest mark.
Fig. 17 is a diagram showing a priority order assignment method of genres being displayed.
Fig. 18 is a diagram showing a priority order assignment method of genres being displayed.
Fig. 19 is a diagram showing an assignment method of genre not to be displayed.
Fig. 20 is a diagram showing a landmark display processing flow for a plurality of genres in accordance with the present invention.
Fig. 21 is a diagram showing the upper limit value table of landmark display.
Fig. 22 is a diagram showing the lower limit value table of landmark display.

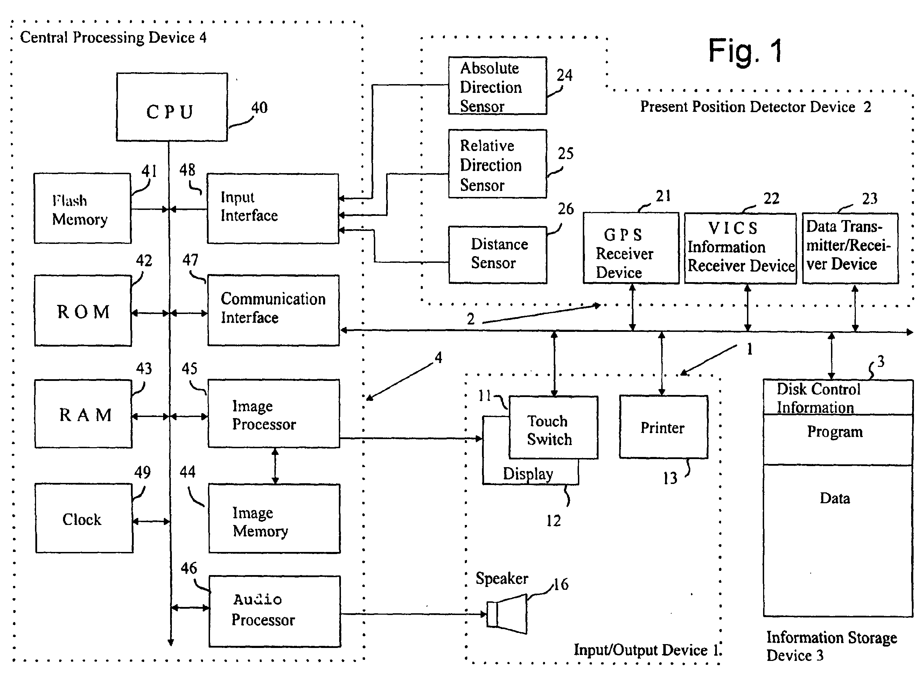

Fig. 1 is a diagram showing a first embodiment of the vehicle navigation apparatus to which the invention is applied.

As shown in Fig. 1, the vehicle navigation apparatus in accordance with the present invention is constituted from an input/output device 1 for inputting and outputting information as to route guidance, a present position detection device 2 for detecting information concerning a present position of a vehicle to which the apparatus is implemented, an information storage device 3 which records therein navigation data as required for calculation of routes, display/audio guidance data as necessary for route guidance, programs (applications and/or OS) and the like, and a central processing device 4 which performs display/audio guidance processings required for route search processings and route guidance and which also provides control over the entire system. First of all, the arrangement of respective devices will be explained below.

The input/output device 1 is provided with functions of instructing navigation processings to the central processing device 4 in conformity with a driver's will and of printing out processed data, thereby permitting input of a target place or destination and output of guidance information via audio and/or display when required by the driver. As a means for attaining such functions, its input section has a touch switch 11 and operation switches for input of a destination based on the telephone number and map coordinates thereof as well as for request of route guidance. Obviously, this may alternatively be an input device such as a remote controller or the like. In addition, an output section includes a display unit 12 which displays input data and also automatically displays route guidance as graphics images on the screen upon reception of a request from the driver, a printer 13 which produces prints of data as processed by the central processing device 4 and those data as stored in the information storage device 3, and a speaker 16 for output of resultant route guidance using voices.

Here, there may be added a voice recognition device for enabling voice input and a record card reader device for reading data recorded in IC cards or magnetic cards. There may also be added a data communication device which is for data communications between the navigation apparatus and certain information sources including an information center for storing therein data necessary for navigation and providing information via communication lines upon drivers' requests, and an electronic personal information management tool prestoring drivers' specific data such as map data, destination data and the like.

The display unit 12 is constituted by a color CRT or color liquid crystal display panel, for color-display outputting all the screens necessary for navigation including a route setting screen, block segment drawing screen, traffic intersection drawing screen and the like based on map data and guidance data to be processed by the central processing device 4, and also for displaying on the screen some buttons for use in performing operations for setting route guidance and changing guidance and screens during route guidance. Especially, pass-through intersection information such as the name or title of an intersection to be passed through will be color-displayed on the route-segment drawing screen in a pop-up manner at any time as necessary.

This display 12 is provided within an instrumental panel near the driver's sheet, thus enabling the driver to affirm a present location of his or her vehicle by viewing a route-segment drawing while acquiring therefrom information as to a future route from here. The display 12 is also provided with a touch switch 11 corresponding to the display of function buttons, and is thus arranged so that the aforesaid operations are effectuated on the basis of a signal as input upon touch of an appropriate button. An input signal generator means which is structured from this button and the touch switch and the like may constitute the input section; however, a detailed description thereof will here be omitted.

The present position detection means 2 is apparatus which is constituted from a GPS receiver device 21 for acquiring information by utilizing the present position satellite global positioning system (GPS) for vehicles; a VICS information receiver device 22 for acquiring information by use of FM multiple broadcasts, radio wave beacon, optical beacon, and the like; a data transmitter/receiver device 23 for bidirectionally communicating-by use of a mobile telephone set, personal computer, or the like-information with the information center (ATIS, for example) and with other vehicles; an absolute direction sensor 24 for detecting the travelling direction of the vehicle on the absolute direction basis by utilizing geomagnetism, by way of example; a relative direction sensor 25 for detection of the travelling direction of the vehicle on the relative direction basis by use of a steering sensor or gyro sensor, for instance; and, a distance sensor 26 for detection of the travelled distance of the vehicle from the number of rotation of a whole shaft, for example, and which apparatus operates to transmit and/or receive, for example, road information and traffic information that are information concerning the vehicle's travel and to detect information as to a present vehicle position and further to transmit/receive information as to the present position.

The information storage device 3 is an external storage device which stores therein programs and data for navigation, and may be comprised of a CD-ROM, by way of example. The programs may involve a program for use in performing processings such as route search, automatic re-search (peripheral or "nearby-area" route search, entire or "full-range" route search) and the like, a processing program as will be later shown in a flowchart in connection with one illustrative embodiment, a program for carrying out display output control required for route guidance and voice output control as required for voice guidance as well as associated data, and further display information data required for both route guidance and map display. The data may be all of the stored data as necessary for the navigation apparatus, and may consist of several kinds of data files such as map data, search data, guidance data, map-matching data, destination data, registered location data, road data, genre-dependent data, and the like. It should be noted here that the present invention may also be applied to those of the type as designed to employ the CD-ROM for exclusive storage of data with the programs being separately stored in the central processing device.

The central processing device 4 is equipped with a CPU 40 for performing a variety of kinds of arithmetic processing, a flash memory 41 for reading programs out of the CD-ROM of the information storage device 3 and storing the same therein, a ROM 42 for storage of a program for executing program-check and update processings of the flash memory 41 (program read-in means), a RAM 43 for temporarily storing therein searched route guidance information such as the point coordinates of a destination being set presently, road name code number and the like along with data being subjected to arithmetic processing, an image memory 44 for storage of image data to be used for screen display onto the display, an image processor 45 which fetches image data from the image memory 44 on the basis of a display output control signal from the CPU 40 and applies thereto image processings to output the result to the display, an audio processor 46 which synthesizes together an audible voice, phrase, sentence with one meaning, sound and the like read from the information storage device 3 on the basis of the audible output control signal made in CPU and converts a synthesized signal into an analog signal which is output to the speaker 16, a communication interface 47 for handling input/output data over communication channels, a sensor input interface 48 for fetching sensor signals from the present position detection device 2, a clock 49 for writing date and time into internal dialog information, and others. Here, the apparatus is arranged so that route guidance is provided by using both screen display and audible output while allowing the driver to select the presence or absence of audio or voice output.

It should be noted that the program for performing the aforesaid update processing may alternatively be stored in an external storage device.

All of the programs in accordance with the present invention as well as the other programs required for performing navigation may be stored in the CD-ROM which is one external storage medium; alternatively, part or all of such programs may be stored in the ROM 42 on the side of the main body.

A variety of kinds of navigation functions may be attained by performing arithmetic processing procedures in such a way that the data and programs stored in this external storage medium are input as external signals to the central processing device within the main body of the navigation apparatus.

The navigation apparatus in accordance with the present invention includes a relatively large capacity of flash memory 41 for reading certain program(s) out of the CD-ROM that is one external storage device as described previously, and a small capacity of ROM 42 which prestores therein a program (program read-in means) for performing a start-up processing of a CD. The flash memory 41 is the one which continues holding therein once-stored information after interruption of power supply thereto; namely, it is a nonvolatile memory means. And, it performs the CD start-up processing by causing certain program of the ROM 42 acting as the program read-in means to get started for checking the program stored in the flash memory 41 while reading disk control information and the like of the CD-ROM of the information storage device 3. The program load processing (update processing) is done by judgment based on this information and the status of the flash memory 41.

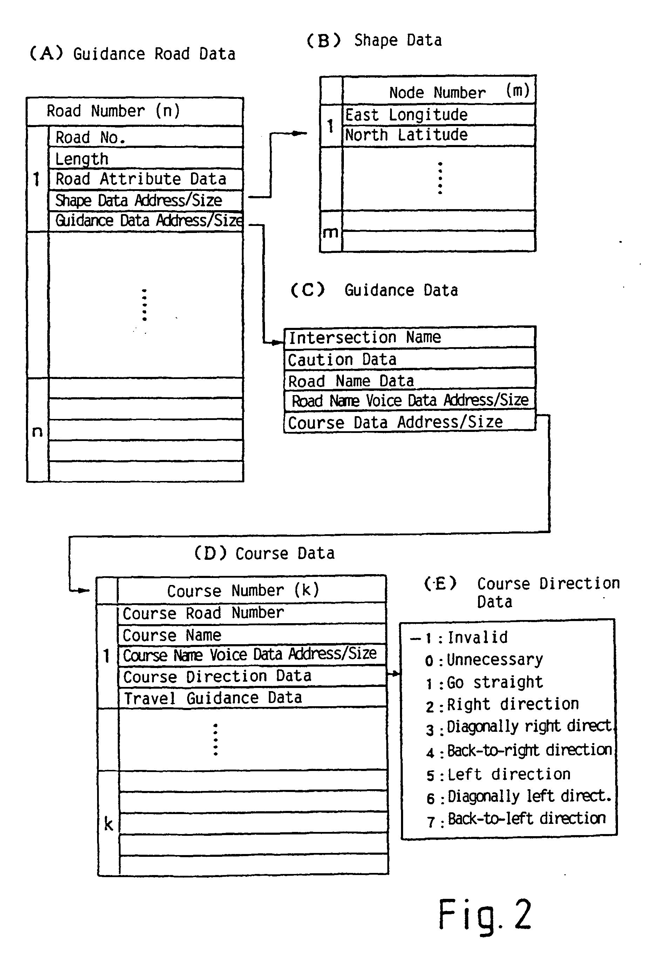

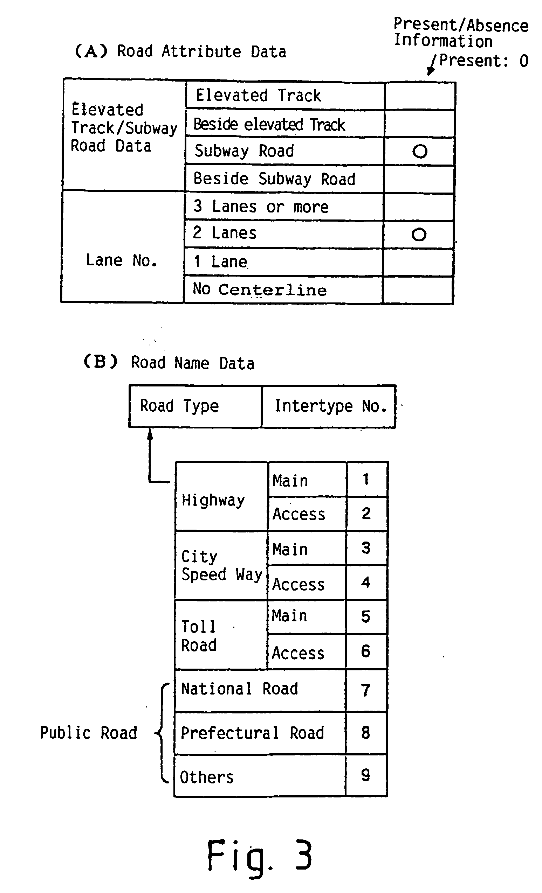

Figs. 2 to 4 show exemplary configuration of major data files as stored in the information storage device 3 embodying the invention shown in Fig. 1. Fig. 2(A) shows a guidance road data file which stores therein data items necessary for calculating a route or routes at the route calculation means and for performing route guidance, which may consist of, with respect to each of a number n of roads, a road number, length, road attribute data, shape data address/size, and guidance data address/size. Said road number is set in a manner independent on each direction (approaching path, return path) with respect to each road between adjacent branch points. As shown in Fig. 3(A), said road attribute data used as road guidance auxiliary information data is the data which may represent whether a road of interest is an elevated track, a side access to such elevated track, subway road, or a side access to the subway road, along with information as to the lane number. As shown in Fig. 2(B), when each road is subdivided into segments at a plurality of nodes (knots), said shape data has coordinate data consisting of the east longitude and north latitude with respect to each node number m.

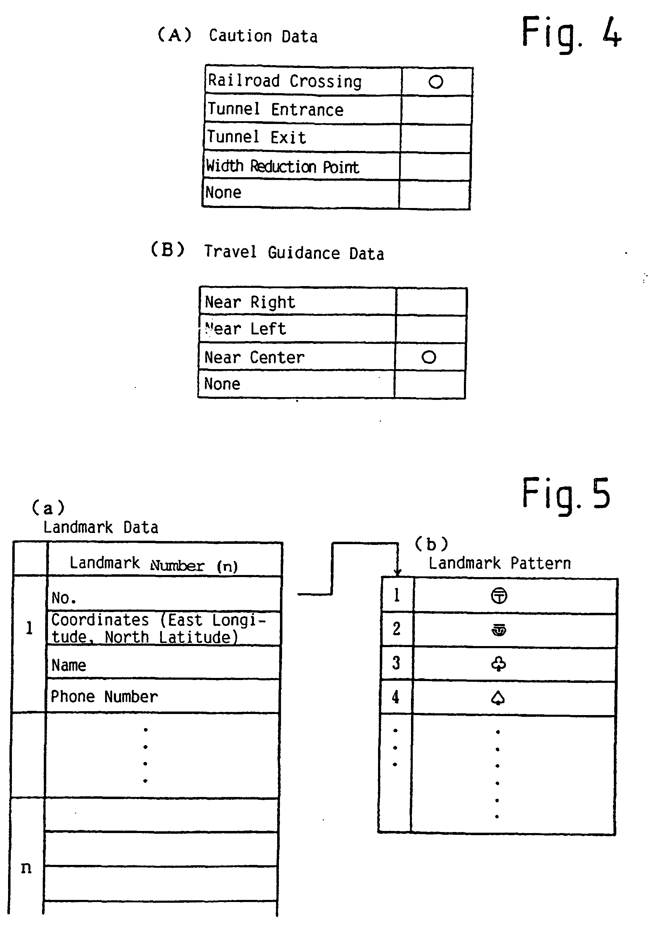

As shown in Fig. 2(C), said guidance data may consist of an intersection (or branch point) name, caution data, road name data, road name voice data address/size, and course data address/size. As shown in Fig. 4(A), said caution data is the data for indication of whether a present vehicle location is at a railroad crossing, tunnel entrance, tunnel exit, width-reduced point, or none; the data is for use in calling driver's attention when the vehicle is at certain locations such as railroad crossings, tunnels and the like, other than branch points. As shown in Fig. 3(B), said road name data is the data which may represent road type information of a highway, city speed way, toll road or ordinary public road (national road, prefectural road, others) as well as information as to whether the vehicle is presently on a main lane or access path with respect to highways, city speed ways, and toll roads, which data may be constituted from road type data and further a subsidiary or inter-type number indicative of individual number data within each road type.

As shown in Fig. 2(D), said course data may consist of a course road number with respect to each of a course number k, course name or title, course name voice data address/size, course direction data, and travel guidance data. Said course name also includes a district name. Also, the course direction data may be the data which indicates invalidity (no use of the course direction data), unnecessity (no guidance performed), and several direction information items such as the go-straight, right direction, diagonally right direction, back-to-the-right direction, left direction, diagonally left direction, and back-to-the-left direction. As shown in Fig. 4(B), said travel guidance data stores therein data items for use in providing guidance as to which lane is to be selected for a travel in cases where a road of interest has a plurality of lanes; this data may specify whether a road of interest is the near-the-right, near-the-left, near-the-center, or none.

Fig. 5 shows landmark data.

As shown in Fig. 5(a), with respect to each landmark, the landmark data may consist of a number, coordinates (east longitude, north latitude), title or name, and phone number, thus permitting registration of patterns of landmarks for use in being actually displayed on a map on a number-to-number correspondence basis as shown in Fig. 5(b).

An explanation will now be given of the navigation processing of the present invention.

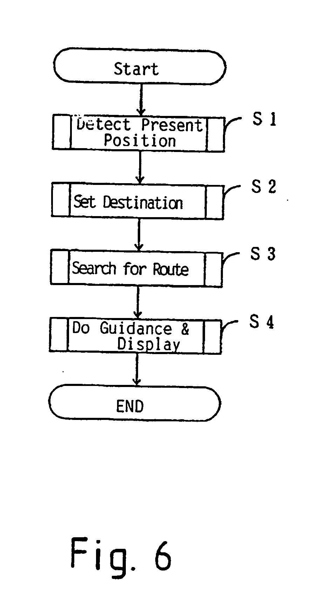

Fig. 6 is a diagram for explanation of the flow of an entire system of the navigation apparatus in accordance with the invention.

When a program(s) is/are read out of the information storage device 3 into the CPU 40 of the central processing device 4, the program for route guidance gets started. The steps are, (1) let the present position detection device 2 detect a present position for displaying a nearby area map with such detected present position being as its center while simultaneously displaying the name of the present position, genre landmarks as set and others (step S1), (2) set a destination by use of a target name such as a place name, facility name or the like, telephone number, administrative address, registered point, road name and the like (step S2); then, (3) perform a route search in a range from the present position toward the destination (step S3). Once the route is determined, route guidance and display will be recurrently carried out until the vehicle actually arrives at the destination while allowing the present position detection device 2 to continue tracking the present position loci (step S4). In a case where an input of a temporary stop-and-stay setting is made before arriving at the destination, a search area is set to perform a search again within such search area causing similar route guidance to be iteratively carried out until vehicle's arrival at the destination. It should be noted that when tracking the present position detects occurrence of an out-of-the-route event, an entire or full range of route is again re-searched for from a present location to the destination as set at step S2; or alternatively, the search area is updated for execution of the re-search with an intersection on the guidance route in the nearby area near or around the present location being as a destination.

Next, the automatic re-search processing of the invention will be explained hereinafter.

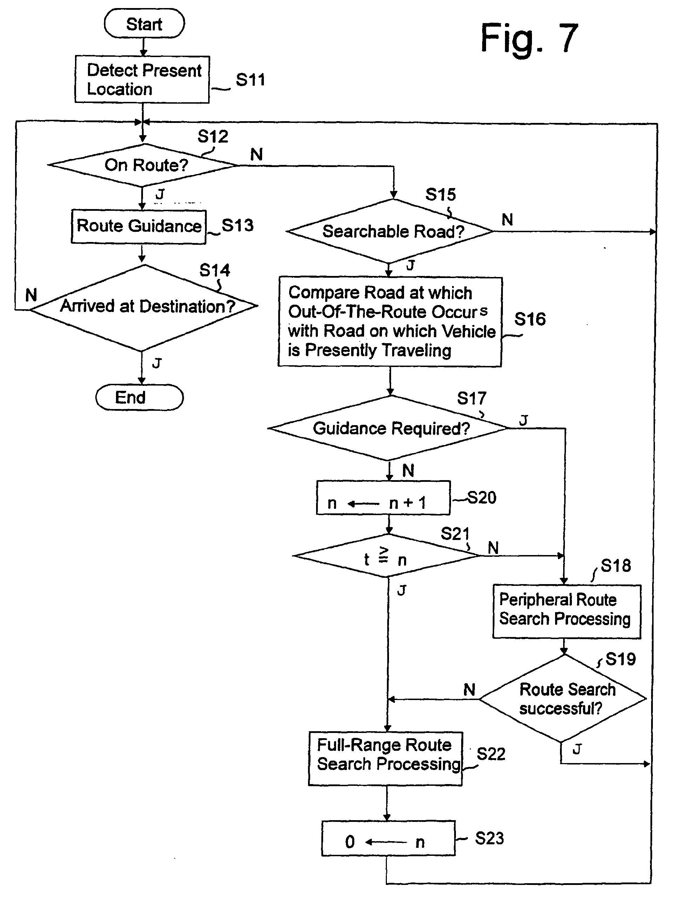

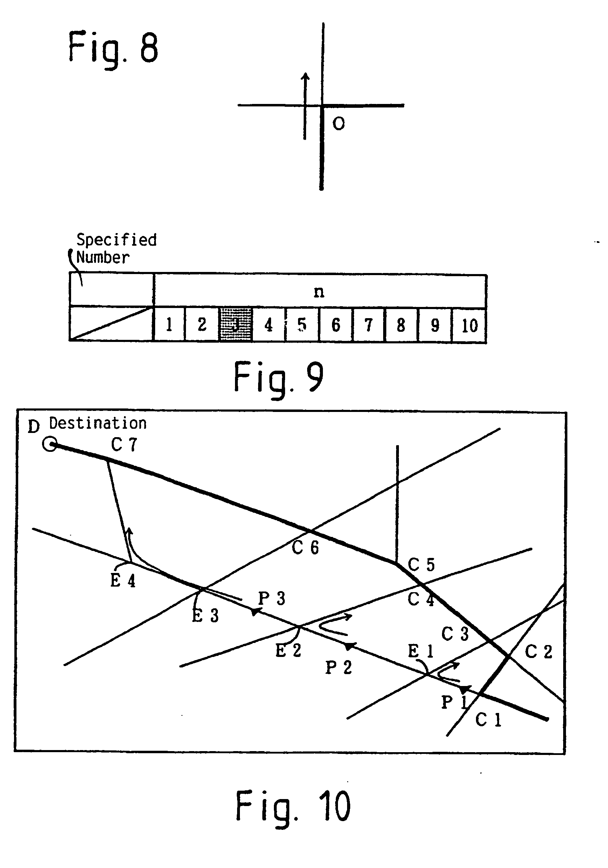

Fig. 7 is a diagram showing a search processing flow of the present invention, Fig. 8 is a diagram for explanation of a method of judging whether guidance is required or not, and Fig. 9 is a diagram showing a re-search method.

Shown in Fig. 7 is a processing routine to be performed after determination of a route to a destination and during travel along this route. First of all, detect a present location (step 11), judge whether the loci of such detected present location is on the route (step 12), continue performing route guidance if it is on the route (step 13), and perform this guidance until the vehicle actually arrives at the destination (step 14). On the other hand, if the vehicle is out of the route (step 12N), judge whether a present location is on a search-executable road such as a narrow back street, parking area or the like (step 15); if it is not such search-executable one (step 15N) then it will be necessary for the vehicle to travel until it is encountered with any one of search-executable roads, streets or paths. If it is a search-executable road (step 15Y) then judge whether guidance is necessary or not by comparison with a road at certain location whereat the vehicle becomes out of the route and a road along which the vehicle is presently travelling (step 16, step 17).

The processings at this steps 16 and step 17 are such that as shown in Fig. 8, by way of example, where the guidance route is determined in a such way that the vehicle is expected to turn to the right (see a fat line in the drawing) at an intersection O, any guidance is to be judged to be unnecessary when the vehicle behaves to go straight ahead by passing through such intersection O (see an arrow in the diagram) by interpreting this situation such that occurrence of this out-of-the-route event is based on the driver's exact intention. In other words, it is judged, by comparing the road along which the vehicle is presently running with a route extending through the intersection O, that any guidance is unnecessary upon detection of vehicle's going straight at an intersection to be turned.

Where guidance is judged to be necessary at step 17 (step 17Y), set a search area to perform a route search processing with respect to a nearby range around the present location with an intersection on the original route being as a destination (step 18); if such route search was successful (step 19Y), then allow the vehicle to travel along a route turning back to the original route (fat line), and repeat the processings following the step 12.

Where no guidance is judged to be necessary at step 17, in other words, when the vehicle behaved to go straight passing through the intersection to be turned, count up the value of a counter by one. Then, judge whether such count-up value of the counter is greater than or equal to a predefined number n; if it is less than the predefined number n then perform a peripheral or nearby-area search for turning back to the original route. If it is greater than or equal to the predefined number n then newly effectuate a full-range route search up to a target location without regard to such original route while causing the counter value to be reset. The reason for this is as follows. Occurrence of only a single go-straight event at the intersection to be turned still contains the possibility of a driver's mistake of merely forgetting to turn; in view of this, the apparatus is so designed as to effectuate the full-range route search by judging that the driver has no intentions to get back to the original route when the vehicle continues going straight via a plurality of intersections to be turned.

The predefined number n which is used as part of the judgment criteria as to whether the full-range route search is to be done may be settable on a case by case basis to be 1, 2, 3... ... ... 10 as shown in a table of Fig. 9, by way of example. If n = 1 then a full-range route search will be carried out immediately when the vehicle goes straight to pass through a single intersection to be turned; if n = 10 then such full-range route search will be done first after the vehicle has traveled straightforward to pass through a series of ten intersections to be turned. Typically, n = 3 to 5 or therearound may be adequate for selection; however, the following description as will be presented in conjunction with Fig. 10 assumes a setting of n = 3 in Fig. 9-that is, an exemplary case where it is judged that the driver has no specific intentions to get back at the original route exclusively when his or her vehicle has traveled straightforward by passing through a set of three subsequent intersections to be turned.

As shown by fat line in Fig. 10, where a guidance route is a route which extends through intersections C1, C2, C3, C4, C5, C6 and C7 in this order to reach a destination D, when the vehicle does not turn to the right at the intersection C1 and continues going straight, and if its present location is at a point P1, the counter is subjected to +1; however, since the count value remains less than 3, a nearby-area route search to get back to the route as designated by the fat line is performed with a search area being set. Regardless of the fact that this search results in a route for turning to the right at an intersection E1 being recommended by guidance, if the vehicle passes through this intersection E1 straightforwardly then a count-up is carried out providing "2." At this time, since the count value is still less than 3, a nearby-area route search for getting back to the original route is performed at a present location P2. Irrespective of the fact that this search results in a route being guided for turning to the right at the intersection E2, if the vehicle passes through this intersection E2 straightforwardly then the resulting count value becomes equal to "3;" at the present position P3, a full-range route search is effectuated since it is judged that the driver has no intentions to get back to the original route.

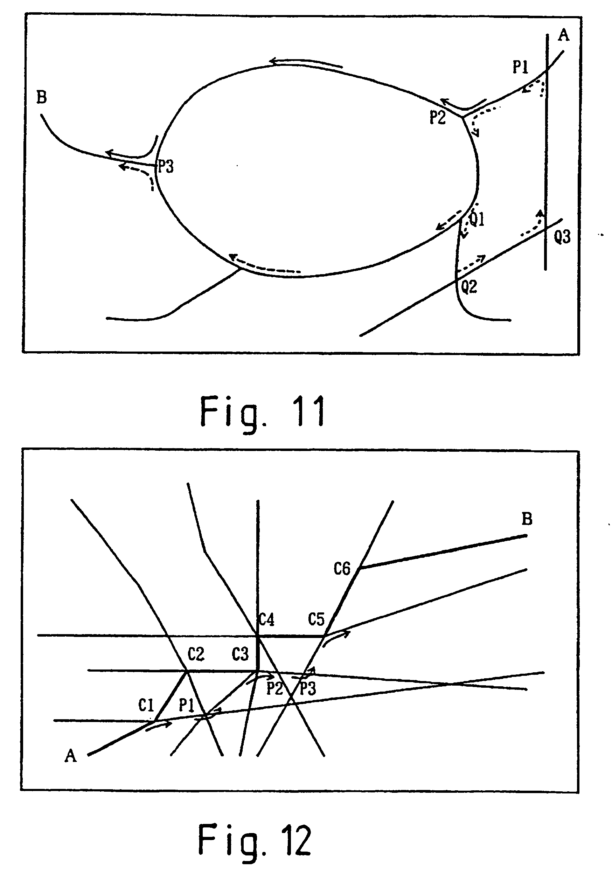

Fig. 11 is a diagram showing another embodiment of the present invention.

Fig. 11 is a diagram showing an example which is designed to select either one of the nearby-area route search and full-range route search in conformity with the type of a road on which the vehicle becomes out of the route, wherein the full-range route search processing is to be done when it is judged that the road type is a loop-like lane, toll-road, or the like.

In a guidance route (a solid arrow line in the drawing) which extends from a direction A to enter a loop-like lane such as a city speed-way at a branch point P2 and which then drops down from the loop-like lane at a branch point P3 to go toward a direction B, a certain case is shown in which the vehicle erroneously turns to the opposite direction at the branch point P2 as indicated by a dotted line, which results in a route being re-searched (near-by area route search) which is for getting back at the branch point P1 after dropping down at a branch point Q1 and travelling via a branch point Q2 and branch point Q3. However, in the case of such loop-like lane, it should be expected that if the vehicle does not drop down at the branch point Q1 and still travels along the loop-line lane as designated by a dotted line, then it would arrive at a branch point P3; if it keeps running straightforwardly without dropping down at the branch point Q1, then it is judged that the driver intentionally causes such out-of-the-route event thus permitting effectuation of the full-range route search. Such a case will not exclusively be limited to loop-like lanes; with regard to specific types of roads or streets which have apparently distinguishable entrance and exit points, such as toll roads or agricultural paths, there will be cases where performing a full-range route search toward a destination remains better in possibility of obtaining good results than returning to the original route upon occurrence of an out-of-the-route event. Accordingly, it is possible to provide better guidance by judging whether the type of a road relating to occurrence of an out-of-the-route is one of specific types of roads such as loop-like roads, toll roads and the like and then performing a full-range route search depending upon such judgment result.

Fig. 12 is a diagram showing a further embodiment of the present invention.

In Fig. 12, there is shown a case where when a route is defined from the direction A through the intersections C1, C2, C3, C4, C5 and C6 toward the direction B, the vehicle becomes out of the route at intersection C1 to turn to the right as indicated by an arrow of solid line, and behaves to approach from an intersection P1 to the intersection C3 by ignoring a re-search based route guidance which recommends getting back from a next intersection P1 to intersection C2, and further is out of the original guidance route at the intersection C3 to approach the intersection P2, moreover at this time continues running toward an intersection P3 and the intersection C5 from intersection P2 by ignoring guidance which recommends a route returning from intersection P2 to intersection C4, and still further at intersection C5 travels out of the original route at intersection C5. In this way, in certain cases where the vehicle acts to pass through an increased number of intersections along a searched route-by turning at each of a series of intersections, or by continuing running straightforward thereat-against recommendation of route guidance, it may be considered that in most cases a presently recommended route under guidance does never meet the driver's preferences. In such case also, it should be required to execute the full-range route search. If this is the case, it will be preferable that the apparatus is designed in a way such that the full-range route search is effectuated when a predetermined number of successive out-of-the-route events take place, which number may be an appropriate value as selected from a range of from 2 to 10. Additionally, in cases where such out-of-the-route events occur frequently, the apparatus may also be arranged such that certain kind of out-of-the-route events due to vehicle's turning are distinguished in weighting parameter from remaining kinds of out-of-the-route events due to straightforward movements-for instance, the weighing of the former is determined to be half that of the latter-for permitting effectuation of the full-range route search when the total number of out-of-the-route occurrences becomes equivalent to a specified value.

In the way as described above, the peripheral or nearby-area route search is terminated for the first time to be replaced with a full-range route search exclusively when it is judged that the driver intentionally causes his or her vehicle to be out of a presently recommended guidance route; as a consequence, the full-range route search may be prevented from being carried out unnecessarily. On the other hand, since mere repetitive execution of only peripheral route searches will no longer happen, it is possible to provide adequate guidance according to the driver's intentions while at the same time enabling reduction of search processing time duration.

As has been described above, in accordance with principles of the present invention, the vehicle navigation apparatus is specifically arranged so that it judges that a vehicle driver has no intentions to get back to an initial route when his or her vehicle behaves to go straight passing through one or more intersections to be turned, and then effectuate a re-search processing with respect to a full-range covering a destination therein. Consequently, it becomes possible to selectively make use of either one of the nearby-area route search and full-range route search successfully upon occurrence of out-of-the-route events, which may in turn reduce search time duration while simultaneously enabling accomplishment of adequate route guidance that meets driver's intentions.

Next, a method of displaying landmarks with a plurality of genres in accordance with the present invention will be explained hereinafter.

In cases where some landmarks are displayed on a guidance map as additional information having genre information such as gas stations, convenience stores, banks, and the like, simply displaying such landmarks on a map would reduce visual recognizability of map display; accordingly, in the present invention, the navigation apparatus is specifically arranged such that when landmarks are displayed, certain limitations are added to information to be displayed in conformity with actual conditions thereby eliminating occurrence of a decrease in visual recognizability. As such conditions or criteria, a variety of parameters is available, including the number of landmarks within the range of guidance map display, the degree of priority of genres as assigned by the vehicle driver, the display scale of a map, the vehicle traveling speed, the travel direction, the category of a road along which the vehicle is presently running, which day of the week, and the like.

First of all, one exemplary case will be explained in which an upper limit (100, for example) is set for the total number of landmarks to be displayed on a single screen with orders of priority being assigned to the genres displayed within the range as set here.

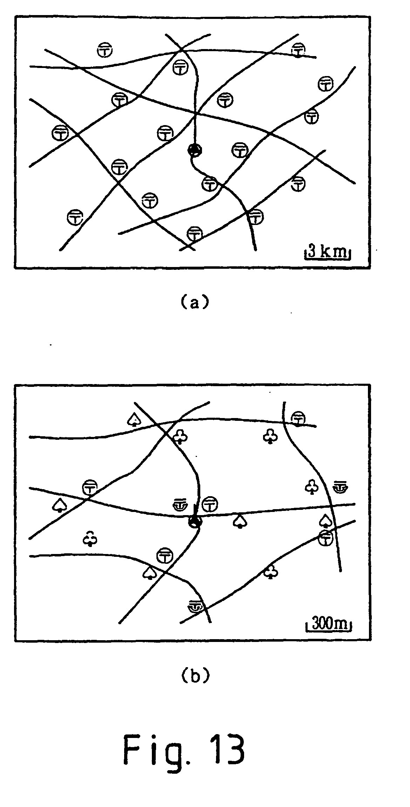

Fig. 13 shows a guidance map screen which displays thereon landmarks with a present vehicle position being as the center thereof, wherein Fig. 13(a) shows a wide area-scaled guidance map screen whereas Fig. 13(b) is a narrow or precise scale guidance map screen.

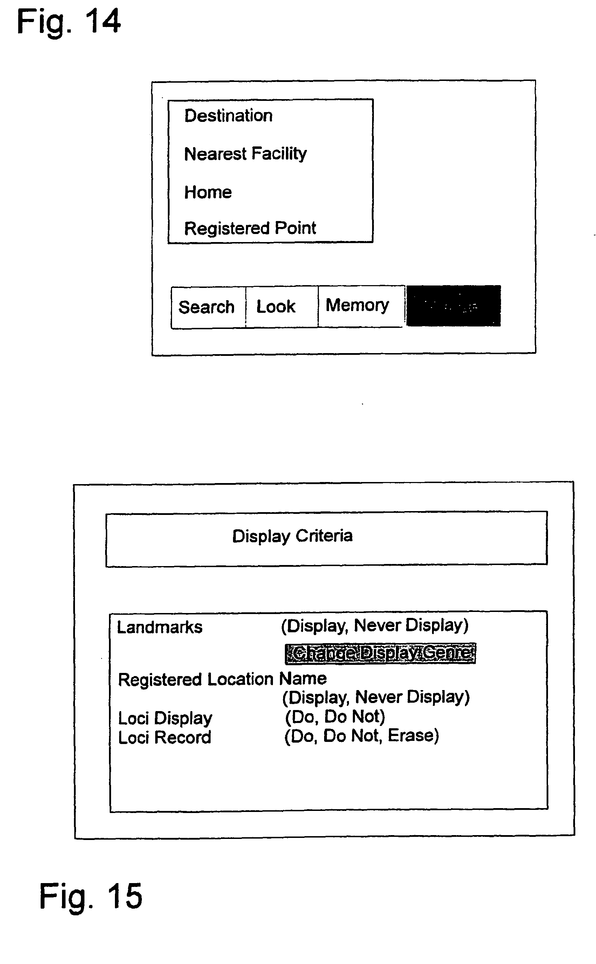

By way of example, in the guidance map screen of Fig. 13(a), the display image will be changed to a selection screen shown in Fig. 14 upon activation of the menu button of a remote controller, or alternatively, a corresponding portion of the screen where a menu is being displayed.

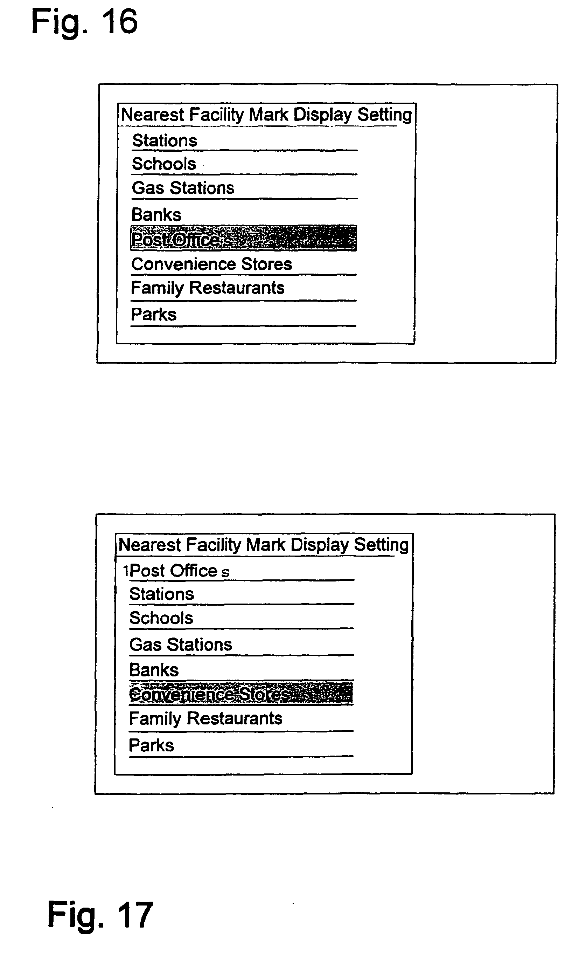

In the screen shown in Fig. 14, several items are displayed at lower part of the screen: SEARCH (searching for another route), SEE (confirming), STORE (registering), and CHANGE (changing display criteria). In this situation, if the "CHANGE" is selected, the display is altered to a display criteria selection screen shown in Fig. 15. Indicated on this screen are certain display criteria concerning landmark, registered-location name, loci display, and loci record. Here, when one item adhered with an indication "CHANGE DISPLAY GENRE" is selected, the screen will be changed to a nearest mark display setting screen shown in Fig. 16. Displayed on this screen are multiple genres such as stations, schools, gas stations, banks, post offices, convenience stores, family restaurants, public parks, and the like. Here, when a cursor is moved at the "POST OFFICES" indicator with an appropriate button clicked, a corresponding list is displayed at the uppermost position along with its priority order number "1" while rendering different in color of characters being displayed therein as shown in Fig. 17.

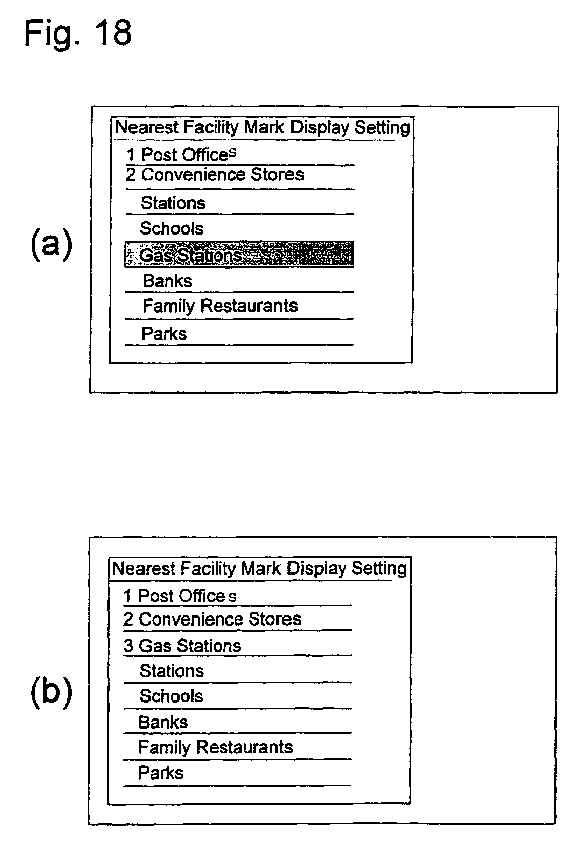

Subsequently, when the "CONVENIENCE STORES" indicator is assigned for instance, this category is displayed at the second level in the list with its characters changed in color, along with the priority order number "2" as shown in Fig. 18(a). Further, when the "GAS STATIONS" indicator is selected, this category is displayed at the third level in the same list with its character color changed, along with the priority order number "3" as shown in Fig. 18(b).

With such upper limit addition to the number of landmarks to be displayed while setting the priority order to the genres being displayed in the way as described above, it will possibly happen that since selecting only post-office landmarks reaches the upper limit in the wide-area scale screen shown in Fig. 13(a), the remaining landmarks are not displayed, which may allow any other landmarks to be displayed in addition to the post-office landmarks when changed to the precise scale shown in Fig. 13(b).

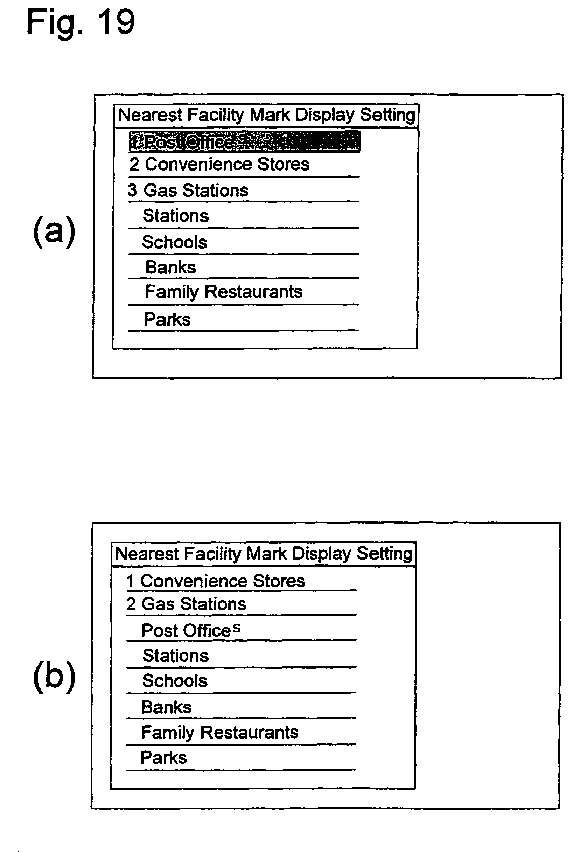

It should be noted here that where a genre once assigned for display is desired to be later changed to non-display genres-by way of example, when the indication of "POST OFFICES" is to be erased-in Fig. 19(a), the cursor is moved at the post-office indicator with first priority order with a click activated, and the "POST OFFICES" is now listed below the genre being displayed as shown in Fig. 19(b) causing the genres with second and third priority orders to be positionally shifted upwardly or incremented thus offering the first and second priority orders, respectively. Also, upon movement of the cursor at a genre with no priority orders assigned thereto while causing an assigned button to be kept depressed for an increased time period (three seconds, for example), this will be changed to a to-be-displayed genre having the uppermost priority order and then be list-displayed at the uppermost position. Additionally, the setting procedure will be improved in efficiency if the system is designed in the settings of such priority orders to come with self-study functions for letting those with an increased number of to-be-displayed genre assignment times be displayed at upper levels of the list on the display screen.

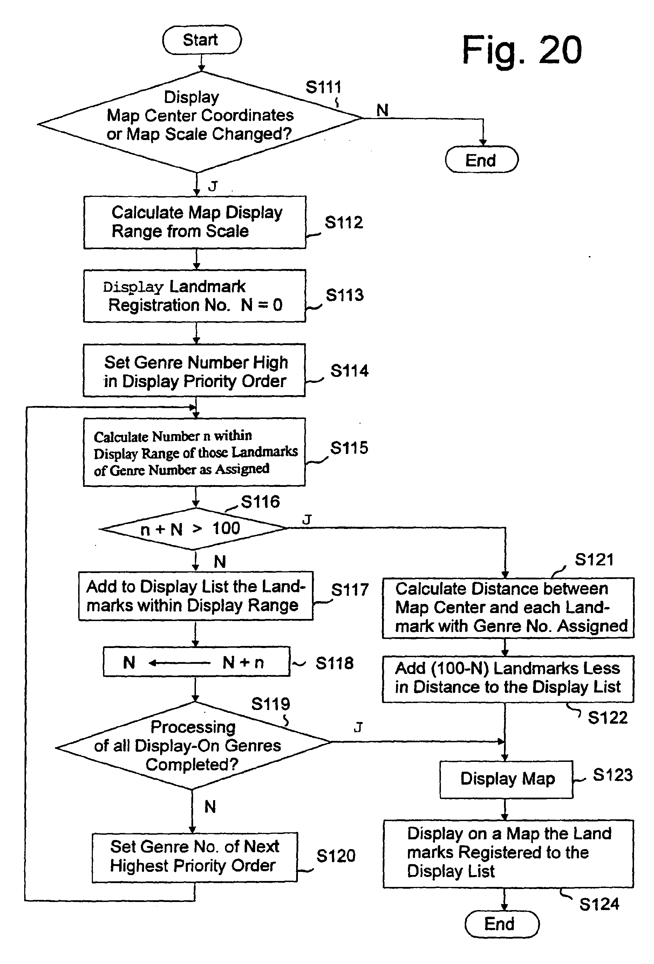

A processing flow will now be explained with reference to Fig. 20 in a case where a hundred of landmarks are to be superimposed onto a road map as displayed on a single screen with the genres thereof being added with priority orders.

Displaying of landmarks with plural genres in this example is determined to be one hundred (100) in number for display on a guidance map screen. When the display area is changed as the vehicle travels, or alternatively, when the map scale is altered, the display genre facility number within such map coverage is likewise changed causing the number of landmarks to be displayed to vary accordingly. In view of this, first of all, at step 111, judge which of the coordinates of a display map center and map scale is changed. If no changes are found (step 111N), then a presently available display is kept as it is since the landmarks to be displayed are not changed. On the other hand, if either the coordinates of a display map center or map scale is changed (step 111Y), then calculate a map display range based on resultant scale (range in the screen coordinates of such map) (step 112) thus letting the display landmark registered number N = 0 (step 113). Next, in a way as has been described previously in conjunction with Figs. 16-19, set specific genre numbers with relatively higher orders of priority (step 114), and then calculate a within-the-display range number n from among certain landmarks having such genre number as set (step 115). For instance, when the priority is "1 post offices," "2. convenience stores," and "3. gas stations" as shown in Fig. 18, n = 30 if the post-office number at the first priority is 30. Next, judge whether n + N > 100 (step 116). In this example, since n + N = 30, add to the display list any post offices falling within the display range letting the value of n + N equal N (steps 117, 118). Next, where the processing is not completed with respect to all the display-ON genres (genres to be displayed), set a genre number with the next highest priority order and repeat the processing steps from the step 115 (steps 119, 120). In the example of Fig. 18, the second highest priority is assigned to convenience stores; if the within-the-display range number is 60 then let n + N = 90. This means that the resulting value is yet less than 100. Accordingly, it is still permissible to add to the display list any convenience stores within the display range. Furthermore, the third highest priority is assigned to gas stations; if the within-the-display range number is 50 then n + N = 50 + 90 = 140, which tells that the resulting value goes beyond 100. At this time, at step 121, calculate the distance of a respective one of the landmarks having the assigned genre number (landmarks of gas stations) and the map center. Then, add those with less distance values to the "100-N" display list. In this case, N = 90 so that only ten, i.e. 100 - 90 = 10, ones of the gas stations which are short in distance from the post office are added to the display list (step 122). In this way, a map is displayed while at the same time allowing the 100 landmarks added to the display list to be displayed on the map (step 122, 123). It should be noted here that in a case where the total number of such landmarks with assigned genre numbers within the display range is less than 100, the map will be displayed at the step whereat the processing is completed with respect to all the display-ON genres which have been set at step 119. Also, in the case of displaying landmarks, it can take place that too-close landmarks visually overlap each other on the screen. If this is the case also, in order to retain visual recognizability of marks of more interest having higher orders of priority, those landmarks of less interest having lower priority orders are first drawn or depicted causing landmarks with higher orders of priority to be overwritten on them thereby to ensure that the marks of the highest priority order are last depicted.

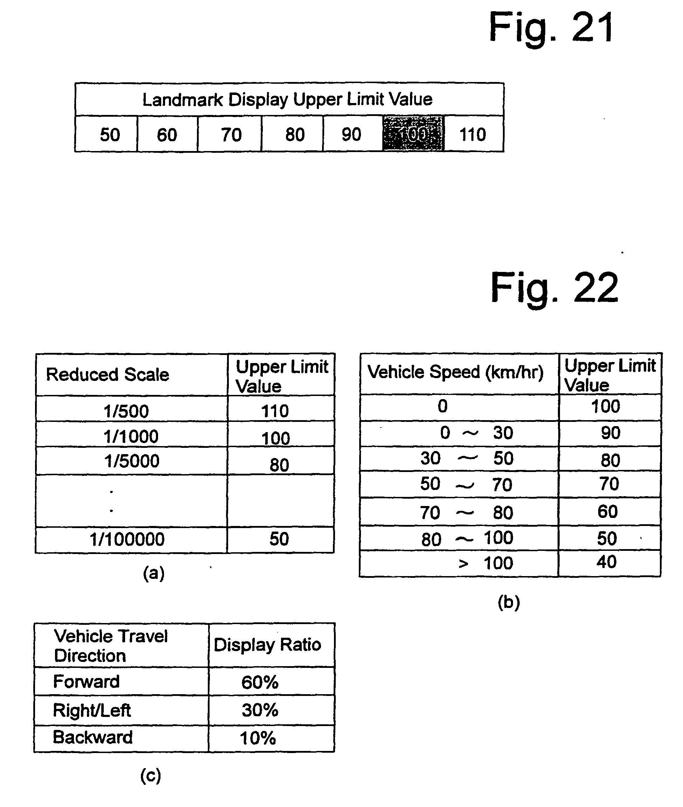

It should be noted that while in the foregoing embodiment the upper limit value of the on-a-single-screen displayable landmark number was set at 100, the present invention should not exclusively be limited thereto. The embodiment may alternatively be modifiable in a way shown in Fig. 21, wherein a table is prepared in advance which stores therein a variety of upper limit values for later selection of any appropriate one from among them. In Fig. 21, it is shown that one specific upper limit value "100" is set.

Also, in the alternative of the upper limit value(s) as displayed, the apparatus may be arranged to set a display range first and then perform a search for display with respect to this limited display range.

It will also be possible to arrange the apparatus in a way such that the prescribed upper limit value is variable depending upon the actual map display scale (reduced scale), vehicle travel speed, travel direction, and the like.

By way of example, as shown in Fig. 22(a), the landmark display upper limit values are set at 110, 100, 80,... ... 50 with respect to certain reduced scales 1/500, 1/1000, 1/5000,... ... 1/100000. Alternatively, with regard to the vehicle speed, the landmark display upper limit values are modified to be 100, 90, 80, 70, 60, 50, 40 with respect to vehicle speed values 0km/hr, 0-30km/hr, 30-50km/hr, 50-70km/hr, 70-80km/hr, 80-100km/hr, and greater than 100km/hr, respectively. Or alternatively, the range to be displayed within a screen remains modifiable in accordance with the vehicle speed; for instance, permit displaying of landmarks within the full range of a display screen when the vehicle speed is less than or equal to 40km/hr, and erase some landmarks falling within a 300-km range around a present vehicle location when the vehicle speed is greater than or equal to 60km/hr, thereby enabling successful acquisition of road information with higher priorities during traveling. It is a yet further alternative that as shown in Fig. 22(c), a direction-dependent display distribution scheme may be employed wherein the forward part of travel direction is set at 60% of the upper limit value as set in the manner shown in Fig. 21, 22(a) or 22(b), the right/left direction part is at 30% thereof, and the backward part is at 10% thereof in a way independent of the vehicle travel direction. Yet further, it is recommendable, where a route is set, to display landmarks which are along the route rather than depending upon the travel direction. Especially, depending upon combinations with the upper limit value to display, it will possibly occur that while a driver's preferable facility does exist at certain location to which the vehicle is coming closer, such facility fails to be displayed due to the fact that too much information items are present in a backward area in the vehicle travel direction. If this is the case, giving the top or greater priority to dealing with such forward-part information items along the route (travel direction) may facilitate the vehicle driver to obtain necessary information in advance, which in turn enables the driver to remain affordable in driving his or her vehicle.

Furthermore, as the alternative to the combination with the above-mentioned genre priority orders, the landmark display upper limit value may be combined with one or several as selected from a variety of parameters which follow: the map display scale (reduced scale), vehicle speed, travel direction, road type under travel, and "what is a day of the week" criterion.

For example, with a combination with the reduced scale or the order of priority, a hundred of landmarks with higher orders of priority from the upper limit may be output at a scale of 1/100. At a 1/500 scale, those with higher priorities are extracted; when the resulting number exceeds the upper limit of "100," then the upper limit of information items to be output is changed permitting output of only the information items having their priorities equal to those prior to excess of the upper limit. By way of example, in a case where 87 pieces are found at the time point when extracted up to the second order of priority, and extracting those with the third order of priority causes resultant number to go beyond 100, the upper limit of information amount is set at 87 while outputting information items with their priority orders less than or equal to the second order. It should be noted here that when extracting those with the first order of priority results in the number being greater than 100, the upper limit may be changed to 115 upon extraction of 115 information items, for example.

Where the vehicle is traveling on a highway, facility information items other than those along the highway have less meaning; in such a case, it may be arranged so that a search is done with the display range being limited to a nearby area along the highway and with the display piece-number criterion being excluded.

As apparent from the foregoing description, one or a plurality of genres of landmarks are selected by users' operation for displaying the same on a guidance screen-or erasing such display-thereby controlling the landmarks to be displayed on the basis of specified criteria; accordingly, it becomes possible to prevent the inherent or original map from being difficult to see, thus improving the visual recognizability. It is also possible to attain a selectable landmark presentation: For precise scale displays, by way of example, a plurality of genres of landmarks near a present vehicle position may be displayed; in wide area scale, a great number of landmarks with more than one assigned genre are displayed in a wide area.

## Claims

1. A vehicle navigation apparatus comprising:
storage means (3) for storing therein information as to landmarks including genre information, mark information in the form of icons and position coordinates; and
display selection means (11) for selecting a genre of landmarks to be displayed from said storage means (3),
**characterized by**
landmark information search means (S115,S121) for searching landmarks of said selected genre on the basis of certain criteria;
display control means (S117,S122) for outputting said mark information and said position coordinates of landmarks which satisfies said certain criteria as a result of searching by said landmark information search means; and
display means (12) for displaying said landmarks on a map by their corresponding icon at the position indicated by their position coordinates output from said display control means.

2. The vehicle navigation apparatus as recited in claim 1, comprising
display priority order setting means (S114) for setting the order of priority of landmarks to be displayed, and
wherein said display control means (S117,S122) outputs said mark information and said position coordinates of landmarks in accordance with the priority order set by said display priority order setting means.

3. The vehicle navigation apparatus as recited in claim 1 or 2, comprising
scale setting means (S111,S112) for setting the scale of a map to be displayed, and
wherein said display control means (S117,S122) outputs said mark information and said position coordinates of landmarks in accordance with the scale set by said scale setting means (S111,S112).

4. The vehicle navigation apparatus as recited in claim 1 or 2, wherein said display control means (S117,S122) outputs said mark information and said position coordinates of landmarks in accordance with the travel condition of vehicle.

5. The vehicle navigation apparatus as recited in claim 1 , 2 or 4, wherein said display control means (S117,S122) outputs said mark information and said position coordinates of landmarks in accordance with vehicle speed.

6. The vehicle navigation apparatus as recited in claim 1, 2 or 4, wherein said display control means (S117,S122) outputs said mark information and said position coordinates of landmarks in accordance with vehicle travel direction.

7. The vehicle navigation apparatus as recited in claim 1, 2 or 4, wherein said display control means (S117,S122) outputs said mark information and said position coordinates of landmarks in accordance with type of road on which vehicle is traveling.

8. A vehicle navigation method comprising the following steps:
(a) storing information as to landmarks including genre information, mark information in the form of icons and position coordinates; and
(b) selecting a genre of landmarks to be displayed from said stored landmark information; **characterized by**
(c) searching landmarks of said selected genre on the basis of certain criteria;
(d) outputting said mark information and said position coordinates of landmarks which satisfies said certain criteria as a result of searching in step (c); and
(e) displaying said landmarks on a map by their corresponding icon at the position indicated by their position coordinates output in step (d).

9. The vehicle navigation method as recited in claim 8, comprising the steps of:
setting the order of priority of the genre landmarks to be displayed, and
outputting said mark information and said position coordinates of landmarks in accordance with the set priority order.

10. The vehicle navigation method as recited in claim 8 or 9, comprising the steps of:
setting the scale of a map to be displayed, and
outputting said mark information and said position coordinates of landmarks in accordance with the set scale.

11. The vehicle navigation method as recited in claim 8 or 9, comprising the step of: outputting said mark information and said position coordinates of landmarks in accordance with the travel condition of vehicle.

12. The vehicle navigation method as recited in claim 8, 9 or 11, comprising the step of: outputting said mark information and said position coordinates of landmarks in accordance with vehicle speed.

13. The vehicle navigation method as recited in claim 8 , 9 or 11, comprising the step of: outputting said mark information and said position coordinates of landmarks in accordance with vehicle travel direction.

14. The vehicle navigation method as recited in claim 8, 9 or 11, comprising the step of: outputting said mark information and said position coordinates of landmarks in accordance with type of road on which vehicle is traveling.

15. A storage medium (3) comprising a program which when executed by a computer performs the method steps of the method of any one of claims 8 to 14.

## Patentansprüche

1. Fahrzeugnavigationsgerät mit:
einer Speichereinrichtung (3) zum Speichern von Information über Orientierungspunkte, die Kategorieinformation, Markierungsinformation in der Form von Symbolen und Positionskoordinaten enthält; und
einer Darstellungsauswahleinrichtung (11) zum Auswählen einer darzustellenden Orientierungspunktkategorie von der Speichereinrichtung (3);
**gekennzeichnet durch**:
eine Orientierungspunktinformationssucheinrichtung (S115, S121) zum Suchen von Orientierungspunkten der ausgewählten Kategorie auf der Basis bestimmter Kriterien;
einer Darstellungsteuerungseinrichtung (S117, S122) zum Ausgeben der Markierungsinformation und der Positionskoordinaten von Orientierungspunkten, die als Ergebnis der Suche **durch** die Orientierungspunktinformationssucheinrichtung die bestimmten Kriterien erfüllen; und
einer Anzeigeeinrichtung (12) zum Darstellen der Orientierungspunkte auf einer Karte **durch** ihr entsprechendes Symbol an der Position, die **durch** ihre von der Darstellungsteuerungseinrichtung ausgegebenen Positionskoordinaten angezeigt wird.

2. Fahrzeugnavigationsgerät nach Anspruch 1, mit:
einer Darstellungsprioritätsfolgensetzeinrichtung (S114) zum Setzen der Prioritätsfolge darzustellender Orientierungspunkte;
wobei die Darstellungsteuerungseinrichtung (S117, S122) die Markierungsinformation und die Positionskoordinaten von Orientierungspunkten gemäß der durch die Darstellungsprioritätsfolgensetzeinrichtung gesetzten Prioritätsfolge ausgibt.

3. Fahrzeugnavigationsgerät nach Anspruch 1 oder 2, mit:
einer Maßstabsetzeinrichtung (S111, S112) zum Setzen des Maßstabs einer darzustellenden Karte;
wobei die Darstellungsteuerungseinrichtung (S117, S122) die Markierungsinformation und die Positionskoordinaten von Orientierungspunkten gemäß dem durch die Maßstabssetzeinrichtung (S111, S112) gesetzten Maßstab ausgibt.

4. Fahrzeugnavigationsgerät nach Anspruch 1 oder 2, wobei die Darstellungssteuerungseinrichtung (S117, S122) die Markierungsinformation und die Positionskoordinaten von Orientierungspunkten gemäß dem Fahrtzustand des Fahrzeugs ausgibt.

5. Fahrzeugnavigationsgerät nach Anspruch 1, 2 oder 4, wobei die Darstellungssteuerungseinrichtung (S117, S122) die Markierungsinformation und die Positionskoordinaten von Orientierungspunkten gemäß der Fahrzeuggeschwindigkeit ausgibt.

6. Fahrzeugnavigationsgerät nach Anspruch 1, 2 oder 4, wobei die Darstellungssteuerungseinrichtung (S117, S122) die Markierungsinformation und die Positionskoördinaten von Orientierungspunkten gemäß der Fahrzeugfahrtrichtung ausgibt.

7. Fahrzeugnavigationsgerät nach Anspruch 1, 2 oder 4, wobei die Darstellungssteuerungseinrichtung (S117, S122) die Markierungsinformation und die Positionskoordinaten von Orientierungspunkten gemäß dem Straßentyp ausgibt, auf dem das Fahrzeug fährt.

8. Fahrzeugnavigationsverfahren mit den Schritten:
(a) Speichern von Information über Orientierungspunkte, die Kategorieinformation, Markierungsinformation in der Form von Symbolen und Positionskoordinaten enthält; und
(b) Auswählen einer darzustellenden Orientierungspunktkategorie von der gespeicherten Orientierungspunktinformation; **gekennzeichnet durch**:
(c) Suchen von Orientierungspunkten der ausgewählten Kategorie auf der Basis bestimmter Kriterien;
(d) Ausgeben der Markierungsinformation und der Positionskoordinaten von Orientierungspunkten, die als Ergebnis der Suche in Schritt (c) die bestimmten Kriterien erfüllen; und
(e) Darstellen der Orientierungspunkte auf einer Karte **durch** ihr entsprechendes Symbol an der Position, die **durch** ihre in Schritt (d) ausgegebenen Positionskoordinaten angezeigt wird.

9. Fahrzeugnavigationsverfahren nach Anspruch 8, mit den Schritten:
Setzen der Prioritätsfolge darzustellender Orientierungspunktkategorien; und
Ausgeben der Markierungsinformation und der Positionskoordinaten von Orientierungspunkten gemäß der gesetzten Prioritätsfolge.

10. Fahrzeugnavigationsverfahren nach Anspruch 8 oder 9, mit den Schritten:
Setzen des Maßstabs einer darzustellenden Karte; und
Ausgeben der Markierungsinformation und der Positionskoordinaten von Orientierungspunkten gemäß dem gesetzten Maßstab.

11. Fahrzeugnavigationsverfahren nach Anspruch 8 oder 9, mit dem Schritt zum Ausgeben der Markierungsinformation und der Positionskoordinaten von Orientierungspunkten gemäß dem Fahrtzustand des Fahrzeugs.

12. Fahrzeugnavigationsverfahren nach Anspruch 8, 9 oder 11, mit dem Schritt zum Ausgeben der Markierungsinformation und der Positionskoordinaten von Orientierungspunkten gemäß der Fahrzeuggeschwindigkeit.

13. Fahrzeugnavigationsverfahren nach Anspruch 8, 9 oder 11, mit dem Schritt zum Ausgeben der Markierungsinformation und der Positionskoordinaten von Orientierungspunkten gemäß der Fahrzeugfahrtrichtung.

14. Fahrzeugnavigationsverfahren nach Anspruch 8, 9 oder 11, mit dem Schritt zum Ausgeben der Markierungsinformation und der Positionskoordinaten von Orientierungspunkten gemäß dem Straßentyp, auf dem das Fahrzeug fährt.

15. Speichermedium (3) mit einem Programm, das, wenn es durch einen Computer ausgeführt wird, die Verfahrensschritte des Verfahrens nach einem der Ansprüche 8 bis 14 ausführt.

## Revendications

1. Appareil de navigation pour véhicule comprenant :
des moyens de stockage (3) pour stocker à l'intérieur de ceux-ci des informations concernant des repères comprenant des informations de genre,
des informations de marque sous la forme d'icônes et des coordonnées de position ; et
des moyens de sélection d'affichage (11) pour sélectionner un genre de repères à afficher à partir desdits moyens de stockage (3),
**caractérisé par**
des moyens de recherche d'informations de repères (S115, S121) pour rechercher des repères dudit genre sélectionné sur la base de certains critères ;
des moyens de commande d'affichage (S117, S122) pour délivrer lesdites informations de marque et lesdites coordonnées de position de repères répondant aux dits certains critères en tant que résultats de la recherche par lesdits moyens de recherche d'informations de repères ; et
des moyens d'affichage (12) pour afficher ledit repère par son icône correspondante sur une carte à la position indiquée par ses coordonnées de position délivrées desdits moyens de commande d'affichage.

2. Appareil de navigation pour véhicule selon la revendication 1, comprenant
des moyens de réglage d'ordre de priorité d'affichage (S114) pour régler l'ordre de priorité des repères à afficher, et
dans lequel lesdits moyens de commande d'affichage (S117, S122) délivrent lesdites informations de marque et lesdites coordonnées de position de repères en fonction de l'ordre de priorité réglé par lesdits moyens de réglage d'ordre de priorité d'affichage.

3. Appareil de navigation pour véhicule selon la revendication 1 ou 2, comprenant :
des moyens de réglage d'échelle (S111, S112) pour régler l'échelle d'une carte à afficher, et
dans lequel lesdits moyens de commande d'affichage (S117, S122) délivrent lesdites informations de marque et lesdites coordonnées de position de repères en fonction de l'échelle réglée par lesdits moyens de réglage d'échelle (S111, S112).

4. Appareil de navigation pour véhicule selon la revendication 1 ou 2, dans lequel lesdits moyens de commande d'affichage (S117, S122) délivrent lesdites informations de marques et lesdites coordonnées de position de repères en fonction de la condition de déplacement du véhicule.

5. Appareil de navigation pour véhicule selon la revendication 1, 2 ou 4, dans lequel lesdits moyens de commande d'affichage (S117, S122) délivrent lesdites informations de marque et lesdites coordonnées de position de repères en fonction de la vitesse du véhicule.

6. Appareil de navigation pour véhicule selon la revendication 1, 2 ou 4, dans lequel lesdits moyens de commande d'affichage (S117, S122) délivrent lesdites informations de marque et lesdites coordonnées de position de repères en fonction de la direction de déplacement du véhicule.

7. Appareil de navigation pour véhicule selon la revendication 1, 2 ou 4, dans lequel lesdits moyens de commande d'affichage (S117, S122) délivrent lesdites informations de marque et lesdites coordonnées de position de repères en fonction du type de route sur laquelle le véhicule se déplace.

8. Procédé de navigation pour véhicule comprenant les étapes suivantes :
(a) stocker des informations concernant des repères comprenant des informations de genre, des informations de marque sous la forme d'icônes et des coordonnées de position ; et
(b) sélectionner un genre de repères à afficher à partir desdites informations de repères stockées,
**caractérisé par**
(c) rechercher des repères dudit genre sélectionné sur la base de certains critères ;
(d) délivrer lesdites informations de marque et lesdites coordonnées de position de repères répondant aux dits certains critères en tant que résultats de la recherche à l'étape (c) ; et
(e) afficher ledit repère par son icône correspondante sur une carte à la position indiquée par ses coordonnées de position délivrées à l'étape (d).

9. Procédé de navigation pour véhicule selon la revendication 8, comprenant les étapes suivantes :
régler l'ordre de priorité des repères de genre à afficher, et
délivrer lesdites informations de marque et
lesdites coordonnées de position de repères en fonction de l'ordre de priorité réglé.

10. Procédé de navigation pour véhicule selon la revendication 8 ou 9, comprenant les étapes suivantes :
régler l'échelle d'une carte à afficher, et
délivrer lesdites informations de marque et lesdites coordonnées de position de repères en fonction de l'échelle réglée.

11. Procédé de navigation pour véhicule selon la revendication 8 ou 9, comprenant l'étape suivante :
délivrer lesdites informations de marques et
lesdites coordonnées de position de repères en fonction de la condition de déplacement du véhicule.

12. Procédé de navigation pour véhicule selon la revendication 8, 9 ou 11, comprenant l'étape suivante :
délivrer lesdites informations de marques et
lesdites coordonnées de position de repères en fonction de la vitesse du véhicule.

13. Procédé de navigation pour véhicule selon la revendication 8, 9 ou 11, comprenant l'étape suivante :
délivrer lesdites informations de marques et
lesdites coordonnées de position de repères en fonction de la direction de déplacement du véhicule.

14. Procédé de navigation pour véhicule selon la revendication 8, 9 ou 11, comprenant l'étape suivante :
délivrer lesdites informations de marques et
lesdites coordonnées de position de repères en fonction du type de route sur laquelle le véhicule se déplace.

15. Support de stockage (3) comprenant un programme qui, lorsqu'il est exécuté par un ordinateur, effectue les étapes de procédé du procédé selon l'une quelconque des revendications 8 à 14.
